# EUROPEAN PATENT SPECIFICATION

(11) **EP 3 492 760 B1**
(45) Date of publication and mention of the grant of the patent: **24.03.2021**
(21) Application number: 17834436.2
(22) Date of filing: 26.07.2017
(51) Int. Cl.: F16C 33/66, F16C 19/16

(54) **BALL BEARING**
KUGELLAGER
ROULEMENT À BILLES

(30) Priority: 29.07.2016 JP 2016150501
(43) Date of publication of application: 05.06.2019
(73) Proprietor: NSK Ltd., Tokyo 141-8560 (JP)
(72) Inventor: MATSUNAGA, Kyohei, Fujisawa-shi Kanagawa 251-8501 (JP); KATSUNO, Yoshiaki, Fujisawa-shi Kanagawa 251-8501 (JP)
(74) Representative: Grünecker Patent- und Rechtsanwälte PartG mbB
(86) International application number: PCT/JP2017/027105
(87) International publication number: WO 2018/021434

(56) References cited:
- DE-A1-102006 011 978
- DE-A1-102013 208 518
- JP-A- 2003 232 366
- JP-A- 2003 232 366
- JP-A- 2008 075 738
- JP-A- 2013 079 711
- JP-A- 2016 516 969
- JP-U- S63 180 726

## Description

### Technical Field

The present invention relates to a ball bearing according to the preamble of claim 1. Such a ball bearing is known, for example, from DE 10 2013 208518 A', which discloses the features of the preamble of claim 1, JP S63 180 726 U, JP 2003 232 366 A, JP 2008 075 738 A, or DE 10 2006 011978 A1. The present invention relates in particular to a ball bearing to which oil is supplied through an outer ring thereof.

### Background Art

In recent years, with the aim of improving cutting efficiency of a machine tool spindle, the demand for speed up has been increased. Recently, in order to improve production efficiency, the spindle also needs to respond to 5-axis processing machines capable of processing a workpiece having a complicated shape without using a plurality of machine tools and without changing the stage. In the 5-axis processing machine, the spindle and a table is rotated, so that an axial length of the spindle is required to be shortened due to requirements of saving space by shortening a turning radius, or saving electric power by reducing inertia during turning or reducing weight.

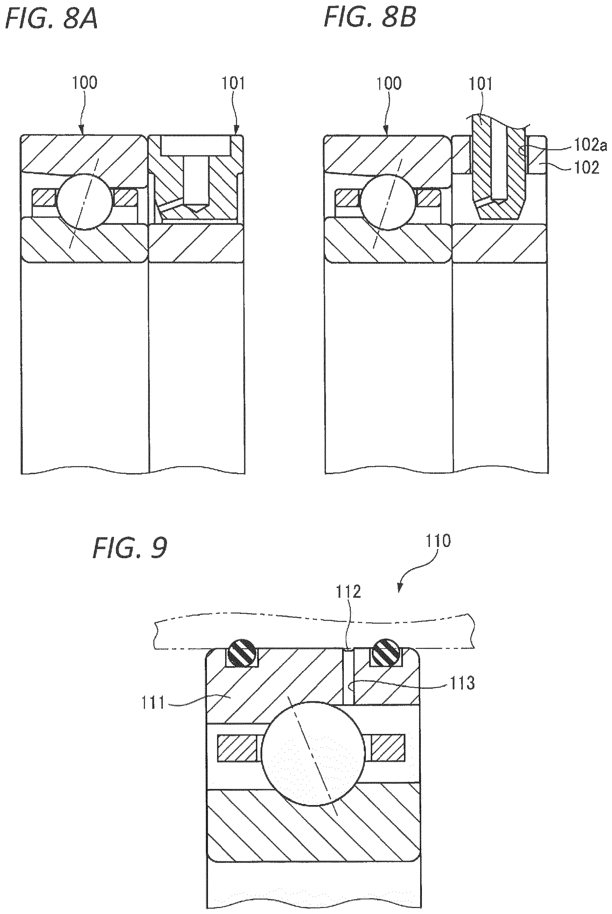

Examples of methods for lubricating rolling bearings, which are often adopted for the machine tool spindle, include grease lubrication, oil air lubrication, oil mist lubrication, or the like. In general, the oil air lubrication is adopted in the field of high speed rotation (dmn is 800,000 or more). As conventional oil air lubrication, there has been know that an oil supply nozzle head 101 arrange on a lateral side of a bearing 100 shown in FIG. 8A or an oil supply nozzle head 101 inserted in a radial through hole 102a of an outer ring spacer 102 arranged on a lateral side of the bearing 100 shown in FIG. 8B is used to supply high pressure air and fine oil particles to an interior of the bearing from a side surface of the bearing.

In this way, it is necessary to separately provide an oil supply part such as the nozzle head 101 and the number of parts of the spindle is increased, which leads to an increase in the cost of the whole spindle and in labor and time of management. Since the nozzle head 101 is used, a shape of the outer ring spacer and a structure of a housing become complicated, and time and labor for designing and processing the spindle is increased. Further, since the nozzle head 101 is provided on an axial side surface side of the bearing, a spacer with a certain length is required, and an axial length of the spindle increases. As a result, a size of the machine tool increases, the spindle weight becomes heavier as the axial length increases, and a critical speed (the critical speed is a rotation speed calculated from a natural vibration frequency of the spindle, and if the spindle is rotated in a range of the critical speed, the vibration becomes large) of the spindle decreases. The supply of oil particles from the oil supply nozzle is obstructed by an air curtain (the air curtain is a wall of high speed air flow in a circumferential direction generated by friction between air and an outer diameter surface of an inner ring rotating at high speed) generated along with the high speed rotation, and as a result, it is difficult to reliably supply the lubricating oil to the interior of the bearing. Such conventional oil air lubrication is superior to grease lubrication in lubricity under high speed rotation, but the responsiveness is becoming more important as speed up has progressed.

As another oil air lubrication method, there has been know that, as shown in FIG. 9, a bearing 110 to which oil is supplied through an outer ring thereof and in which an oil groove 112 is formed on an outer circumferential surface of an outer ring 111 in a circumferential direction thereof and an oil hole 113 oriented in an radial direction is formed at the same axial position as the oil groove 112 is used (for example, refer to Patent Document 1). In such a bearing to which oil is supplied through an outer ring thereof, the supply of oil particles is not obstructed by the air curtain even in a case where the bearing is used at high speed rotation. Therefore, it becomes possible to use a stable spindle even at high speed rotation.

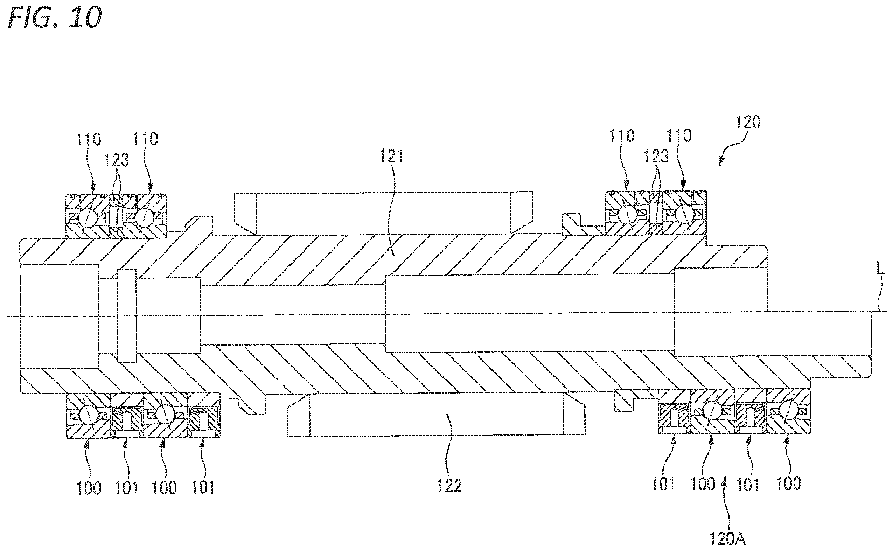

FIG. 10 is a schematic view of a spindle in cases of oil air lubrication using the nozzle head 101 and oil air lubrication in which oil is supplied through an outer ring. An upper half of FIG. 10 is the spindle 120 adopting oil air lubrication in which oil is supplied through an outer ring, and a lower half of FIG. 10 is the spindle 120A adopting oil air lubrication in which the nozzle head 101 is used. In FIG. 10, the reference numeral 121 represents a rotation shaft, and the reference numeral 122 represents a rotor of a motor fitted to the rotation shaft 121. Therefore, in a case of the oil air lubrication in which the nozzle head 101 is used, in order to supply the lubricating oil from a side surface of the bearing 100, a spacer with a certain axial length or more is required. In contrast, in a case where oil is supplied through an outer ring, since the spacer for oil supply is unnecessary, it is possible to eliminate the nozzle head and simplify a structure of the spacer, so that an axial length of a spacer 123 can be shortened than that using a nozzle head. Therefore, in a bearing to which oil is supplied through an outer ring thereof, designing and processing of the spindle and parts for oil supply and management of these parts are simplified and overall costs in designing, manufacturing and management of the machine tool can be lowered. In addition, since the axial length is shortened, it also leads to reduction in size of the machine tool and improvement of the critical speed of the spindle. Therefore, compared with conventional bearings to which oil is supplied from a side surface thereof, bearings to which oil is supplied through an outer ring thereof have many advantages.

### Prior Art Document

### Patent Document

Patent Document 1: JP-A-2013-79711

### Summary of the Invention

### Problems to be Solved by the Invention

In a bearing to which oil is supplied through an outer ring thereof, since lubricating oil is directly supplied to the vicinity of a contact portion between rolling elements and inner and outer rings, functional problems may occur in the bearing according to supply positions. For example, in a case where a position of an raceway side opening of an axial hole of the outer ring overlaps a contact ellipse of a contact portion between an outer ring groove and a ball, a contact surface pressure between the outer ring groove and the ball increases in the vicinity of an edge of the opening and damage such as premature seizure is likely to occur in the bearing. Further, even if the position of the raceway side opening of the axial hole provided in the outer ring does not overlap the contact ellipse between the outer ring groove and the ball, when the lubricating oil is supplied to the vicinity of the contact ellipse at one time, damage due to a large amount of heat generated in the bearing may occur.

The present invention has been made in view of the above-described problems, and an object thereof is to provide a ball bearing that can provide better lubricity and rotation performance by appropriately setting an axial position of a radial hole provided in an outer ring of a bearing to which oil is supplied through the outer ring thereof, according to an intended use of the bearing.

### Means for Solving the Problems

The above object of the present invention is achieved by a ball bearing with the features of claim 1. Preferred embodiments of said ball bearing are defined in the dependent claims 2 to 11.

### Effect of the Invention

According to the ball bearing of the present invention, an outer ring thereof includes at least one radial hole that extends radially through the outer ring from an outer circumferential surface thereof to an inner circumferential surface thereof; and if a minor angle formed by a rotation axis of a ball and a straight line that connects a center of the ball and an intersection point between a centerline of the radial hole and a surface of the ball is defined as A, an axial position of the centerline of the radial hole is set to satisfy a relationship of 0° < λ ≤ 60°, so that more stable lubrication performance and rotation performance can be obtained in high speed applications.

### Brief Description of Drawings

FIG. 1 is a cross-sectional view of a ball bearing according to an example which does not fall under the scope of the present invention, but is important for understanding the invention.
FIG. 2A is a cross-sectional view of a ball bearing in which an axial position of a raceway groove side opening of an radial hole is at a point N, FIG. 2B is a cross-sectional view of a ball bearing in which an axial position of a raceway groove side opening of a radial hole is at a point C, and FIG. 2C is a cross-sectional view of a ball bearing in which an axial position of a raceway groove side opening of a radial hole is at a point D.
FIG. 3A is a cross-sectional view of a ball bearing in which an axial position of a raceway groove side opening of a radial hole satisfies a relationship of A = 1°, FIG. 3B is a cross-sectional view of a ball bearing in which an axial position satisfies a relationship of λ = 31°, and FIG. 3C is a cross-sectional view of a ball bearing in which an axial position satisfies a relationship of λ = 60°.
FIG. 4 is a cross-sectional view of a ball bearing according to a modification of the example which does not fall under the scope of the present invention.
FIG. 5 is a cross-sectional view of a ball bearing according to an embodiment of the present invention.
FIG. 6A is a cross-sectional view of a ball bearing in a case where an inner diameter side opening of a radial hole is entirely positioned in an inclined portion, FIG. 6B is a cross-sectional view of a ball bearing in a case where an inner diameter side opening of a radial hole is positioned to straddle an inclined portion and a straight portion, and FIG. 6C is a cross-sectional view of a ball bearing in a case where an inner diameter side opening of a radial hole is entirely positioned in a straight portion.
FIG. 7A is a cross-sectional view of a ball bearing in a case where an inner diameter side opening of a radial hole is positioned to straddle a straight portion and an outer ring raceway groove, and FIG. 7B is a cross-sectional view of a ball bearing in a case where an inner diameter side opening of a radial hole is entirely positioned in an outer ring raceway groove.
FIGS. 8A and 8B are cross-sectional views showing conventional oil air lubrication in which a nozzle head is used.
FIG. 9 is a cross-sectional view of an oil air lubrication ball bearing to which oil is supplied through an outer ring thereof.
FIG. 10 is a cross-sectional view of a spindle, in which an upper half thereof adopts oil air lubrication in which oil is supplied through an outer ring and a lower half thereof adopts oil air lubrication in which a nozzle head is used.

Hereinafter, ball bearings are described in detail with reference to the drawings.

### (Example)

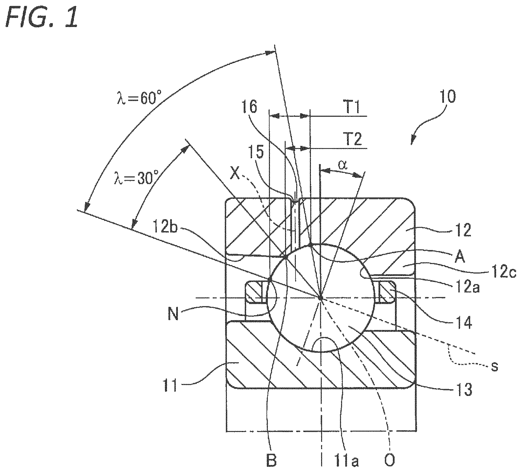

As shown in FIG. 1, the ball bearing 10 according to this example is applied for a high speed machine tool spindle and includes an inner ring 11 including an inner ring raceway groove 11a with a circular arc shape on an outer circumferential surface thereof, an outer ring 12 including an outer raceway groove 12a with a circular arc shape on an inner circumferential surface thereof, and a plurality of balls 13 that are held by a retainer 14 and are rollably arranged between the inner ring raceway groove 11a and the outer ring raceway groove 12a with a predetermined contact angle α. A counter bore 12b including an inclined portion that gradually decreases in diameter from an axial end surface to the outer ring raceway groove 12a is provided on the inner circumferential surface of the outer ring 12 on one axial side, and meanwhile a groove shoulder 12c is formed on the inner circumferential surface on the other axial side.

For applications in which high speed machine tool spindles are used, the contact angle α is set at 15° to 30°. In order to suppress an adverse effect of expansion of a ring on a rotation side due to a centrifugal force during rotation of the bearing and decrease of internal radial clearance due to a temperature difference between the inner and outer rings, the contact angle α is preferably set to satisfy a relationship of 18° < α ≤ 25°.

The ball bearing 10 is a bearing to which oil is supplied through an outer ring thereof, and the outer ring 12 is provided with a radial hole 15 that extends radially through the outer ring 12 from an outer circumferential surface thereof to the inner circumferential surface thereof. A recessed groove 16 in communication with the radial hole 15 is formed on the outer circumferential surface of the outer ring 12 along a circumferential direction thereof. Therefore, in the angular contact ball bearing 10, oil air lubrication is performed such that oil particles and lubrication air supplied from an oil supply path of a housing (not shown) are directly supplied to the ball 13 via the recessed groove 16 and the radial hole 15 of the outer ring 12.

Instead of being provided in the outer ring 12, the circumferential recessed groove may be formed at a position of an opening of the oil supply path that is in communication with the radial hole 15 on an inner peripheral surface of the housing.

In the example, an axial position of a centerline X of the radial hole 15 is set as follows.

Here, in FIG. 1, a rotation axis s is a rotation axis when the ball 13 rolls on the outer ring raceway groove 12a and the inner ring raceway groove 11a during the rotation of the bearing, and forms an angle of substantially 90° with respect to a line representing the contact angle α. A point denoted by N is a point serving as a pole of rotation movement of the ball 13. Further, a point A and a point B in the figure are intersection points between the surface of the ball 13 and straight lines that form angels A of 60° and 30° with the rotation axis s of the ball 13, respectively. The angle A is defined as, a positive angle, an angle formed relative to the rotation axis s of the ball 13 by a straight line that connects a center of the ball 13 and an intersection point between the centerline X of the radial hole 15 and the surface of the ball 13 in a clockwise direction, and is a minor angle between the rotation axis s and the straight line. In the specification, the centerline X of the radial hole 15 includes an extension line thereof.

That is, in the example, an axial position of the centerline X of the radial hole 15 is set to satisfy a relationship of 0° < λ ≤ 60° (in FIG. 1, a range indicated by T1), and preferably a relationship of 30° ≤ λ ≤ 60° (in FIG. 1, a range indicated by T2).

That is, in respect of the axial position of the raceway groove side opening of the centerline X of the radial hole 15, when A exceeds 0°, that is, the axial position of the centerline X of the radial hole 15 is set to closer to a bottom side of an outer ring groove than the point N in FIG. 1, and thus lubricating oil adhering to the surface of the ball 13 during supply of the lubricating oil is carried into the outer ring raceway groove 12a and the inner ring raceway groove 11a due to a centrifugal force generated by revolution of the ball 13 and a centrifugal force generated by the rotation of the ball 13. In particular, due to the centrifugal force generated by the rotation of the ball 13 during rotation of the bearing and the adhesion force of the lubricating oil to the surface of the ball 13, the lubricating oil on the surface of the ball 13 that adheres closer to the bottom side of the groove than the point N in FIG. 1 is carried to an equator side (a side of the line representing the contact angle α in FIG. 1), that is, into the outer ring raceway groove 12a and the inner ring raceway groove 11a.

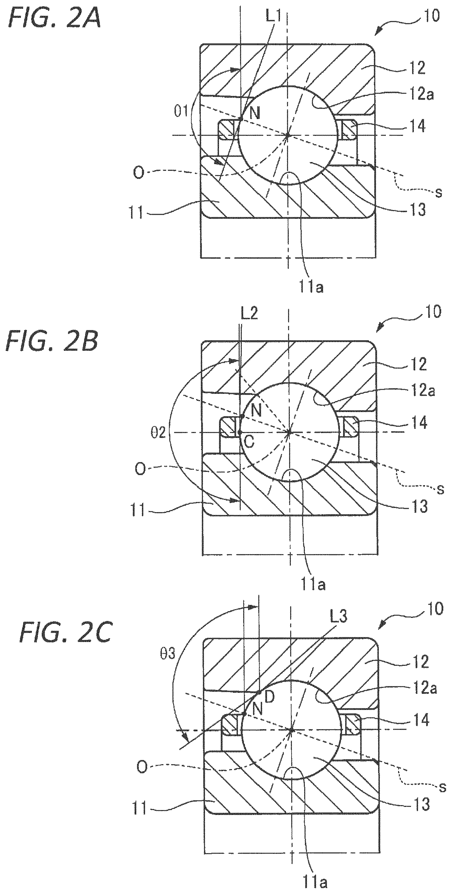

FIGS. 2A to 2C shows a schematic view of the concept of lubricating oil adhesion on the surface of the ball 13. A point C in FIG. 2B and a point D in FIG. 2C represent arbitrary points closer to a side opposite to the bottom of the groove and the bottom side of the groove than the point N on the surface of the ball 13, respectively. Lines L1, L2, and L3 are tangent lines passing through the point N, point C, and point D in a circle representing the surface of the ball 13. Angles formed by the tangent lines L1, L2, L3 and straight lines (corresponding to the centerline X of the radial hole 15 provided in the outer ring 12) extending in the radial direction (parallel to the radial cross section) are defined as θ1, θ2, and θ3.

When the centerline X of the radial hole 15 moves toward the side opposite to the bottom of the groove across the point N, a value of θ in FIG. 2B increases, and adhesion of the lubricating oil to the ball 13 is reduced as compared with a case where the value of θ is small. That is, as the angle θ increases, the supplied lubricating oil is brought into contact with the surface of the ball 13 so as to cover the surface of the ball 13, and spreads to the surroundings. Further, since the possibility that the lubricating oil adheres to places other than the balls 13, such as the retainer 14 also increases, the lubricating oil supplied from the radial hole 15 is less likely to be carried to the contact portion between the ball 13 and the inner ring 11 or the outer ring 12, and therefore, there is a concern that the reliability of lubrication may decrease. In a case where the radial hole 15 is provided at a position where the centerline X of the radial hole 15 intersects the point N, the lubricating oil supplied from the radial hole 15 adheres to the point N, the effect of conveying the lubricating oil by the centrifugal force generated along with the rotation of the ball 13 is reduced, so that there is a concern that the lubricity may be lowered. Therefore, the radial hole 15 is provided such that the centerline X of the radial hole 15 provided in the outer ring 12 is closer to the bottom side of the groove than the point N in FIG. 1 and FIGS. 2A to 2C, and thus more stable lubricity and rotation performance can be obtained.

Meanwhile, when the centerline X of the radial hole 15 reaches a range of λ > 60° in FIG. 1, or reaches the contact angle side across the bottom of the groove, the lubricating oil is supplied to an area close to the contact portion between the ball 13 and the outer ring 12. When the lubricating oil is supplied at once even with an amount of supply by general oil mist lubrication in the vicinity of the contact portion or the contact portion between the ball 13 and the inner and outer rings 11, 12, resistance between the lubricating oil and the ball 13 may increase and a large amount of heat may be generated. Since a large amount of heat is generated, temperature of the bearing parts and the lubricating oil in the vicinity of the contact portion and the contact portion between the ball 13 and the outer ring 12 is increased and performance of oil film forming of the lubricating oil decreases, so that there is a concern that damage such as seizure may occur.

In order to suppress the occurrence of the problem, it is desirable to supply a small amount of lubricating oil little by little to the vicinity of the contact portion and the contact portion between the ball 13 and the inner and outer rings 11, 12, the radial hole 15 is provided such that the centerline X of the radial hole 15 is in the range of 0° < λ ≤ 60 °, preferably 30° ≤ λ ≤ 60° in FIG. 1, and thus the above object can be achieved by the effect of conveying the lubricating oil by the centrifugal force generated along with the rotation of the ball 13. The reason why the range of 30° ≤ λ ≤ 60° is preferable is, such as, a circumferential speed of the surface of the ball 13 is small at the point N and in the vicinity thereof (0° < λ < 30°), and the lubricating oil conveying effect is also reduced. By setting λ to 30° (point B in FIG. 1) or more, a rotation radius of the portion where the lubricating oil adheres, that is, in the rotation axis s becomes half of a ball diameter or more, and an appropriate lubricating oil conveying effect can be obtained. In order to obtain a better lubricating oil conveying effect, it is desirable that the centerline X of the radial hole 15 moves to the range of 30° ≤ λ ≤ 60°.

As compared with the case of 0° < λ ≤ 60°, when the centerline X of the radial hole 15 reaches the range of λ > 60° in FIG. 1, a circumferential rotation speed of the surface of the ball 13 to which the supplied lubricating oil adheres is too high. As compared with the case where the lubricating oil is supplied to a portion with a low circumferential rotation speed, when the lubricating oil is supplied to a portion with a high circumferential rotation speed, resistance between the ball 13 and the lubricating oil increases when the lubricating oil adheres to the surface of the ball 13. Thus, when the lubricating oil is supplied in the range of A > 60°, the amount of heat generated in the bearing is larger than in the case where the lubricating oil is supplied within the range of 0° < λ ≤ 60°. Therefore, the radial hole 15 is provided such that the centerline X of the radial hole 15 is in the range of 0° < λ ≤ 60° and preferably in the range of 30° ≤ λ ≤ 60°, and thus more stable lubricity and rotation performance can be obtained.

In particular, since the bearing (contact angle α = 15° to 30°) used in the high speed machine tool spindle has a small contact angle, and a contact portion between the ball 13 and the outer ring 12 is close to the bottom of the outer ring groove, so that when the centerline X of the oil hole is in the range of λ> 60° while setting the contact angle to an upper limit of 30°, the radial hole 15 overlaps the contact ellipse between the outer ring 12 and the ball 13, which may cause a large contact surface pressure between the vicinity of an edge of the radial hole 15 and the ball 13. Therefore, in high speed applications in which the ball bearing 10 of the embodiment is mainly used, the radial hole 15 is provided such that the centerline X of the radial hole 15 is in a range of 0° < λ ≤ 60°, more preferably in a range of 30° ≤ λ ≤ 60°, and thus more stable rotation performance can be obtained.

In the example, since the contact angle α is set to 15° to 30°, the radial position of the raceway groove side opening of the centerline X of the radial hole 15 is formed within the range closer to a side (counter bore side) opposite to the contact angle than the bottom of the outer ring groove.

The reason why the contact angle α is set to 30 ° or less is as follows.

In the application of the high speed machine tool spindle where oil air lubrication or the like is adopted as in this embodiment, when the contact angle α is set to exceed 30°, the deviation between the rotation axis of the inner and outer rings 11 and 12 and the rotation axis of the ball 13 increases, slip such as spin slip and gyro slip of the contact portions between the ball 13 and the inner ring raceway groove 11a and between the ball 13 and the outer ring raceway groove 12a becomes conspicuous, and the centrifugal force generated by the revolution of the ball 13 also becomes large.

Therefore, an internal load of the bearing (corresponding to a pre-load during operation of the bearing) increases, and the contact pressure of the contact portion also increases. As a result, the contact pressure exceeds a limit PV value that is an index serving as a main factor of a seizure limit at high speed rotation of the bearing.

Therefore, in this application, the above problem can be avoided by setting the contact angle α to 30° or less.

Here, as shown in Table 1, analysis was carried out for bearings of multiple specifications with different contact angles under operation conditions of the spindle required for high speed machine tool spindles. The results are shown in Table 2.

**[Table 1]**

| SELECTED BEARING | ANGULAR CONTACT BALL BEARING |
|---|---|
| dmn VALUE | 1300000 |
| ROTATION SPEED | 14600 min⁻¹ |
| INNER DIAMETER | ϕ70 |
| ROLLING ELEMENET (MATERIAL) | SILICON NITRIDE (Si₃N₄) |
| COMBINATION | DBB (FOUR ROWS ARE COMBINED BACK TO BACK) |
| LUBRICATION | AIR OIL LUBRICATION |
| DRIVING | BUILT-1N) (MOTOR INCORPERATED IN SPINDLE) |

**[Table 2]**

| CONTACT ANGLE (deg) | PRE-LOAD AFTER BEING ASSEMBLED TO SPINDLE | RISK OF SEIZURE | PRESENCE OF VIBRATION DURING OPERATION |
|---|---|---|---|
| 20 | 640 | ⊚; STABLY ROTATABLE | ⊚;EXCELLENT |
| 25 | 540 | ⊚:STABLY ROTATABLE | ⊚; EXCELLENT |
| 30 | 260 | ○; SUBSTANTIALLY STABLY ROTATABLE | ○; GOOD |
| 33 | 0; CANNOT SET PRE-LOAD | ×; ABNORMAL TEMPERTURE RISE → SEIZURE | ×; GREAT VIBERATION |
| 35 | 0; CANNOT SET PRE-LOAD | ×; ABNORMAL TEMPERTURE RISE × SEIZURE | ×; GREAT VIBERATION |

The operation condition of the spindle is that a dmn value (the dmn value is a product of a pitch circle diameter (mm) of a rolling element and a rotation speed (min⁻¹) of the bearing) is 1.3 million or more (standard use condition of a recent high speed spindle), and the centrifugal force generated by rotation is very high. Moreover, as described above, as the contact angle increases, the internal slip of the bearing (spin slip, gyro slip, etc.) increases.

Therefore, in order to lower the internal pre-load during operation at high speed rotation and to lower the PV value of the rolling contact portion, the contact angle is set to be large, and therefore it is necessary to reduce the pre-load (a stationary state means a state where the rotation speed is 0) after the bearing is assembled to the spindle (refer to Table 1).

That is, as a result of specification examination, as shown in Table 2, when the contact angle is 30° or less, even if the pre-load is added after being assembled to the spindle, the function of the spindle can be satisfied, but when the contact angle exceeds 30°, the pre-load cannot be added, and it is inevitable that an internal clearance is larger than 0 (so-called backlash state) after being assembled to the spindle. Therefore, rigidity of the spindle during operation cannot be secured, vibration is likely to occur, and rotation accuracy also deteriorates in a case of the machine tool spindle, thus resulting in poor processing accuracy.

In a state where there is no pre-load in the bearing, since there is backlash in the bearing, revolution slip (skidding that is a phenomenon in which no driving force is transmitted from a rotation ring to a rolling element, and an extremely large slip occurs at the contact portion) at the rolling contact portion is likely to occur during rapid acceleration operation or rapid deceleration operation of the spindle, which may lead to wear and seizure caused by abnormal temperature rise due to this phenomenon.

As can be seen from the estimation results, the contact angle of the bearing should be 30° or less, and under this condition, the effect of 0° < λ ≤ 60° can be effectively demonstrated.

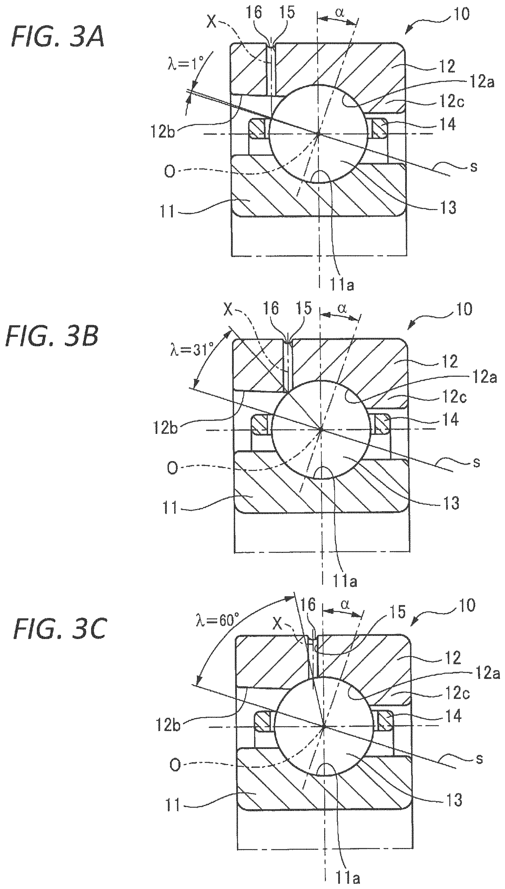

FIGS. 3A to 3C show examples in which the axial position of the centerline X of the radial hole 15 in the embodiment is set to be in the range of 0° < λ ≤ 60°. FIG. 3A shows the radial hole 15 when λ = 1°, FIG. 3B shows the radial hole 15 when λ = 31°, and FIG. 3C shows the radial hole 15 when λ = 60°.

In FIG. 3A, since an opening of the radial hole 15 on an inner diameter side of the outer ring is entirely positioned in the counter bore 12b and is positioned outside the outer ring raceway groove 12a, it is unnecessary to pay attention to the opening of the oil hole during machining of the raceway groove (such as burr at an intersection portion of the oil hole opening and the raceway groove), and the processability is good. Further, the contact portion between the ball 13 and the opening of the oil hole or the contact ellipse between the ball 13 and the outer ring raceway groove 12a do not overlap the opening of the oil hole, so that the assembling workability and handleability is good.

That is, since the opening of the oil hole is outside the outer ring raceway groove 12a, there is no possibility that the surface of the ball is scratched or possibility that scratches on the surface of the ball cause deterioration of acoustic performance or premature damage of the bearing.

In FIG. 3B, an opening of the radial hole 15 on the inner diameter side of the outer ring is formed to straddle the counter bore 12b and the raceway groove 12a. In the general assembling work and bearing use method, since the ball 13 and a part near the counter bore in the outer ring raceway groove 12a are not in contact with each other, the assembling workability and handleability is good for the same reason as above. Further, since a part of the opening of the oil hole is in the raceway groove 12a and is close to the contact portion between the ball 13 and the inner/outer rings 11, 12, oil supply performance is good.

In FIG. 3C, an opening of the radial hole 15 on the inner diameter side of the outer ring is entirely in the outer ring raceway groove 12a and is on an counter bore side in the raceway groove (a side opposite to the contact angle with respect to the bottom of the groove). Therefore, the opening of the oil hole does not overlap the contact ellipse between the ball 13 and the outer ring raceway groove 12a during the rotation of the bearing, so that excessive contact surface pressure generated due to the overlapping does not occur and the premature damage to bearings or the like is less likely to occur. Oil supply performance is better and good rotation performance of the bearing can be realized.

As shown in FIG. 3C, in a case where the opening of the oil hole is in the outer ring raceway groove 12a, it is possible to eliminate the possibility of generating burrs at the intersection portion between the opening of the oil hole and the raceway groove and scratches on the surface of the ball by paying attention to the work method during assembling of the bearing to the spindle or during assembling of the bearing.

In the example, the diameter of the radial hole 15 is set to 0.5 mm to 1.5 mm in consideration of the lubricating oil supply performance. In the example, the radial hole 15 has a uniform diameter throughout the radial direction.

Therefore, according to the ball bearing 10 of the example, if a minor angle formed relative to the rotation axis s of the ball 13 by a straight line that connects the center O of the ball 13 and the intersection point between the centerline X of the radial hole 15 and the surface of the ball 13 is defined as A, the axial position of the centerline X of the radial hole 15 is set to satisfy the relationship of 0° < λ ≤ 60°, so that more stable lubrication performance and rotation performance can be obtained in the ball bearings used for high speed applications.

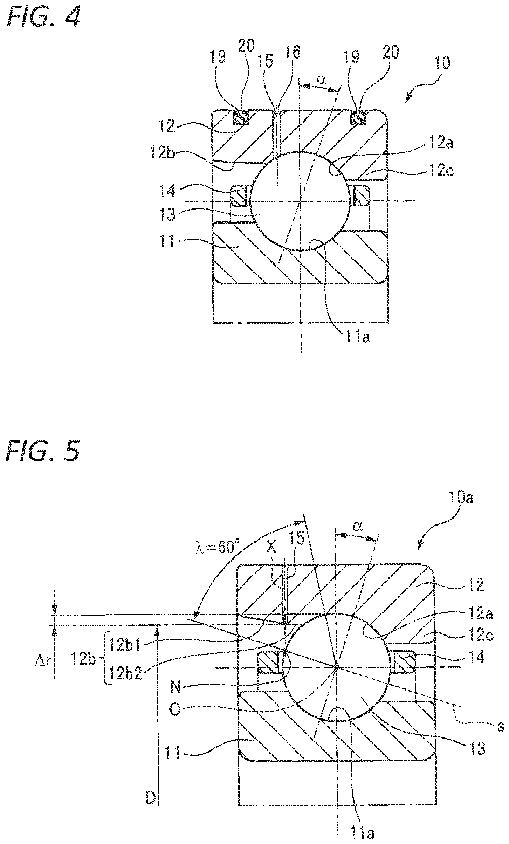

Further, in the example, as the modification shown in FIG. 4, on the outer circumferential surface of the outer ring 12 of the ball bearing 10, annular grooves 19 may be formed along the circumferential direction on both axial sides sandwiching the recessed groove 16, and a seal member 20, for example, which is an annular elastic member such as an O-ring, may be arranged in each annular groove 19. Accordingly, it is possible to prevent leakage of lubricating oil which may occur between the outer circumferential surface of the outer ring 12 and the inner circumferential surface of a housing into which the outer ring 12 is fitted when the lubricating oil is supplied.

### (Embodiment)

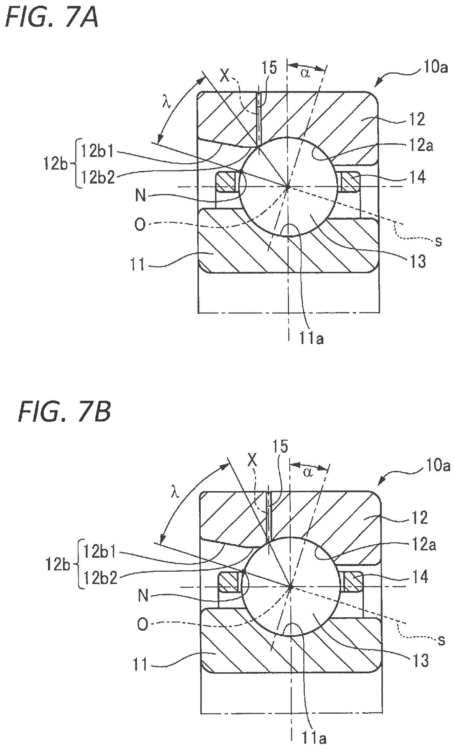

Next, a ball bearing according to an embodiment of the present invention will be described in detail with reference to FIG. 5 to FIGS. 7A and 7B. Parts that are same as or equivalent to those of the example are denoted by the same reference numerals, and the description thereof is omitted or simplified.

An angular contact ball bearing 10a of this embodiment is different from that of the example in the shape of the inner circumferential surface of the outer ring 12 on the counter bore side. That is, in the embodiment, the counter bore 12b includes an inclined portion (conical surface) 12b1 that gradually decreases in diameter from an axial end surface toward the raceway groove 12a side and a straight portion (cylindrical surface) 12b2 that connects the inclined portion 12b1 and the raceway groove 12a and is parallel to a centerline L (see FIG. 10) of a rotation axis of the ball bearing.

In order to prevent the bearings from being disassembled after assembling, the angular contact ball bearing 10a is provided with a portion referred to as a catching margin Δr shown in FIG. 5 on the outer ring 12 or the inner ring 11. Therefore, during assembling of the angular contact ball bearing 10a, the outer ring 12 is heated, and the outer ring 12 is inflated by an amount corresponding to the catching margin Δr so as to be assembled. In order to keep constant heating temperature and time of the outer ring during assembling to facilitate management of the assembling production line and to prevent the bearing from being disassembled after assembling, it is desirable to manage a dimension of the catching margin Δr in the order of several tens of µm by final finish grinding.

Accordingly, in a case of this embodiment in which the straight portion 12b2 for defining the catching margin Δr is provided, the counter bore 12b includes only the inclined portion, and compared with a case where an edge is provided between the counter bore 12b and the outer ring raceway groove 12a, it is possible to facilitate dimension control of the catching margin Δr (since dimensional accuracy is easy to obtain during grinding, and the straight portion is provided, it is easy to measure a dimension D of the catching margin) and to suppress occurrence of ball scratches during assembling of the bearing.

In the embodiment, if a minor angle formed relative to the rotation axis s of the ball 13 by a straight line that connects the center O of the ball 13 and an intersection point between the centerline X of the radial hole 15 and the surface of the ball 13 is defined as λ, the axial position of the centerline X of the radial hole 15 may also be set to satisfy the relationship of 0° < λ ≤ 60°, and preferably a relationship of 30° ≤ λ ≤ 60°. Thus, in the ball bearings used for high speed applications, more stable lubricity and rotation performance can be obtained.

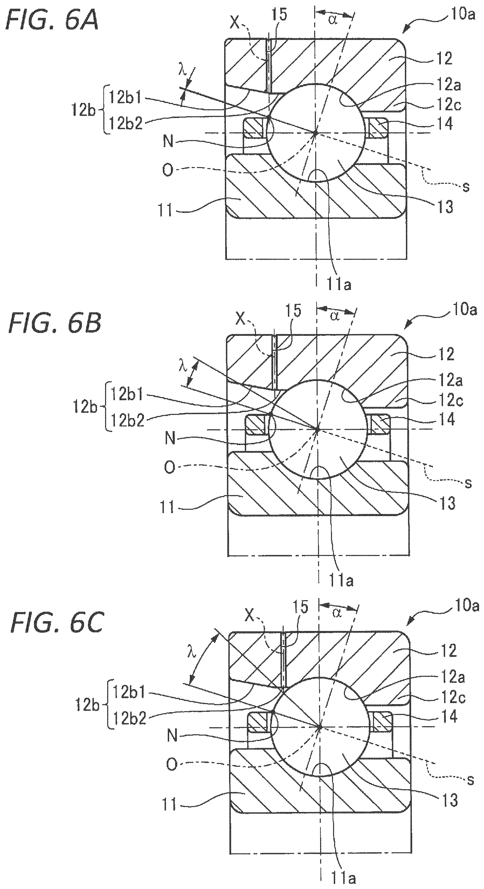

Specifically, in the embodiment, the axial position of the centerline X of the radial hole 15 may be designed at any one of the positions shown in FIG. 6A to FIG. 7B.

In FIG. 6A, the opening of the radial hole 15 on the inner diameter side of the outer ring is entirely positioned in the inclined portion 12b1 of the counter bore 12b.

Since the radial hole 15 is provided in such a position, it is unnecessary to consider the burrs or the like of the opening of the oil hole when machining the raceway groove, and the processability of the outer ring raceway groove 12a is good. Since the opening of the oil hole does not overlap the contact ellipse between the ball 13 and the outer ring raceway groove 12a when the bearing is assembled to the spindle or during use, it is possible to suppress occurrence of ball scratches and abnormal increase in contact surface pressure.

In FIG. 6B, the opening of the radial hole 15 on the inner diameter side of the outer ring is positioned to straddle the inclined portion 12b1 and the straight portion 12b2. Therefore, since the oil can be supplied to a more inner side of the bearing, better rotation performance of the bearing can be obtained in addition to the effect of the ball bearing of FIG. 6A.

In FIG. 6C, the opening of the radial hole 15 on the inner diameter side of the outer ring is positioned in the straight portion 12b2. Therefore, since a part of the opening is inclined, straightness of supplied oil can be secured and the oil can be supplied more reliably, in addition to the effect of the ball bearings of FIGS. 6A and 6B.

Specifically, in the bearings of FIGS. 6A and 6B, the opening of the radial hole 15 on the inner diameter side of the outer ring is formed along the inclined portion 12b1 of the counter bore, a cross section of the opening viewed from the radial direction is inclined with respect to the oil supply direction (direction orthogonal to the centerline L of the rotation axis of the ball bearing). In such a case, since space on the axial end surface side of the opening is wider than that on the straight portion side, pressure on the axial end surface side is weakened and the air supplied together with the oil flows to the inclined portion side of the counter bore, so that there is a possibility that the oil also flows toward the inclined portion side. In contrast, in the bearing shown in FIG. 6C, since the opening of the radial hole 15 on the inner diameter side of the outer ring is entirely in the straight portion 12b2, a cross section of the opening viewed from the radial direction is parallel to the oil supply direction, so that the above-described straightness of the oil can be secured.

In FIG. 7A, the opening of the radial hole 15 on the inner diameter side of the outer ring is positioned to straddle the straight portion 12b2 and the outer ring raceway groove 12a. Such a radial hole 15 is provided, and a part of the opening of the radial hole 15 overlaps the outer ring raceway groove 12a, so that the oil supply performance is improved.

In FIG. 7B, the opening of the radial hole 15 on the inner diameter side of the outer ring is positioned in the outer ring raceway groove 12a. Such a radial hole 15 is provided, so that the oil is directly supplied to a narrow space between the ball 13 and the outer ring raceway groove 12a. Therefore, in particular, the shortage of oil film during high speed operation which requires a larger amount of lubricating oil can be suppressed, so that stable high speed performance can be obtained.

The radial hole may penetrate the outer ring from the outer circumferential surface thereof to the inner circumferential surface thereof in the radial direction, and may be inclined in the circumferential direction in addition to the one formed along the radial direction (parallel to a radial cross-sectional plane) of the embodiment.

In the above embodiment, although the outer ring 12 is provided with one radial hole, it is not limited thereto and the outer ring 12 may be provided with a plurality of radial holes.

For lubricating oil supply to the radial hole of the outer ring, oil mist lubrication may be adopted in addition to the oil air lubrication. In some cases, oil jet lubrication can also be adopted. However, in a case of a grease supply method in which grease is fed from the radial hole 15 of the outer ring 12 by using a lubricant supply device on a peripheral portion of the bearing and the outside of the spindle, when the radial hole 15 is opened in the outer ring raceway groove 12a, the intersection portion between the counter bore 12b and the outer ring raceway groove 12a, or in the vicinity of the counter bore 12b on the outer ring raceway groove side, the grease that is a semisolid containing a thickener is supplied into the outer ring raceway groove 12a.

In this case, since the grease is caught in the outer ring raceway groove 12a, problems such as an increase in torque and abnormal heat generation occur due to stirring resistance. In particular, these problems are likely to occur in high speed rotation as in this embodiment. Accordingly, oil lubrication method for supplying a lubricant in which a thickener is not contained is desirable in the present invention.

Further, the ball bearing of the present invention is not limited to one applied to a machine tool spindle device, and can also be applied as a ball bearing of a general industrial machine or a high speed rotation device such as a motor.

### Description of Reference Numerals

- 10: angular contact ball bearing (ball bearing)
- 11: inner ring
- 11a: inner ring raceway groove
- 12: outer ring
- 12a: outer ring raceway groove
- 12b: counter bore
- 12c: groove shoulder
- 13: ball
- 14: retainer
- 15: radial hole
- 16: recessed groove

## Claims

1. A ball bearing (10) lubricated by lubricating oil, comprising:
an inner ring (11) including an inner ring raceway groove (11a) on an outer circumferential surface thereof;
an outer ring (12) including an outer ring raceway groove (12a) on an inner circumferential surface thereof; and
a plurality of balls (13) rollably arranged between the inner ring raceway groove (11a) and the outer ring raceway groove (12a), wherein
the outer ring (12) includes at least one radial hole (15) that extends radially through the outer ring (12) from an outer circumferential surface thereof to the inner circumferential surface thereof; and
a counter bore (12b) is provided on the inner circumferential surface of the outer ring (12); **characterized in that**
the counter bore (12b) includes an inclined portion (12b1) that gradually decreases in diameter from an axial end surface toward the outer ring raceway groove (12a), and a straight portion (12b2) that connects the inclined portion (12b1) and the outer ring raceway groove (12a) and that is parallel to a centerline (L) of a rotation axis of the ball bearing (10); and that
when a minor angle formed relative to a rotation axis (s) of the ball (13) by a straight line that connects a center (O) of the ball (13) and an intersection point between a centerline (X) of the radial hole (15) and a surface of the ball (13) is defined as λ, an axial position of the centerline (X) of the radial hole (15) is set to satisfy a relationship of 0° < λ ≤ 60°,
wherein the rotation axis (s) of the ball (13) is a rotation axis when the ball (13) rolls on the outer ring raceway groove (12a) and the inner ring raceway groove (11a) during the rotation of the ball bearing (10), and forms an angle of substantially 90° with respect to a line representing the contact angle α.

2. The ball bearing according to claim 1, wherein
an inner diameter side opening of the radial hole (15) is entirely positioned in the inclined portion (12b1).

3. The ball bearing according to claim 1, wherein
an inner diameter side opening of the radial hole (15) is positioned to straddle the inclined portion (12b1) and the straight portion (12b2).

4. The ball bearing according to claim 1, wherein
an inner diameter side opening of the radial hole (15) is entirely positioned in the straight portion (12b2).

5. The ball bearing according to claim 1, wherein
an inner diameter side opening of the radial hole (15) is positioned to straddle the straight portion (12b2) and the outer ring raceway groove (12a).

6. The ball bearing according to claim 1, wherein
an inner diameter side opening of the radial hole (15) is entirely positioned in the outer ring raceway groove (12a).

7. The ball bearing according to any one of claims 1 to 6, wherein
the axial position of the centerline (X) of the radial hole (15) is set to satisfy a relationship of 30° ≤ λ ≤ 60°.

8. The ball bearing according to any one of claims 1 to 7, wherein
a recessed groove (16) in communication with the radial hole (15) is formed on the outer circumferential surface of the outer ring (12) along a circumferential direction thereof.

9. The ball bearing according to claim 8, wherein
annular grooves are formed on the outer circumferential surface of the outer ring (12) along the circumferential direction on both axial sides sandwiching the recessed groove (16), and an annular seal member is arranged in each of the annular grooves.

10. The ball bearing according to any one of claims 1 to 9, wherein
a diameter of the radial hole (15) is 0.5 mm to 1.5 mm.

11. The ball bearing according to any one of claims 1 to 10 is a bearing used for a machine tool spindle.

## Patentansprüche

1. Mit Schmieröl geschmiertes Kugellager (10), das umfasst:
einen Innenring (11), der eine Laufbahn-Nut (11a) des Innenrings an einer Außenumfangsfläche desselben enthält;
einen Außenring (12), der eine Laufbahn-Nut (12a) des Außenrings an einer Innenumfangsfläche desselben enthält;
eine Vielzahl von Kugeln (13), die zwischen der Laufbahn-Nut (11a) des Innenrings und der Laufbahn-Nut (12a) des Außenrings so angeordnet sind, dass sie rollen können, wobei
der Außenring (12) wenigstens ein radiales Loch (15) enthält, das radial durch den Au-ßenring (12) von einer Außenumfangsfläche desselben zu der Innenumfangsfläche desselben verläuft; und
eine Senkbohrung (12b) an der Innenumfangsfläche des Außenrings (12) vorhanden ist; **dadurch gekennzeichnet, dass**
die Senkbohrung (12b) einen geneigten Abschnitt (12b1), dessen Durchmesser von einer axialen Endfläche aus in Richtung der Laufbahn-Nut (12a) des Außenrings allmählich abnimmt, sowie einen geraden Abschnitt (12b2) enthält, der den geneigten Abschnitt (12b1) und die Laufbahn-Nut (12a) des Außenrings verbindet und der parallel zu einer Mittellinie (L) einer Drehachse des Kugellagers (10) ist; und dass
wenn ein kleiner Winkel, der relativ zu einer Drehachse (s) der Kugel (13) durch eine gerade Linie gebildet wird, die einen Mittelpunkt (O) der Kugel (13) und einen Schnittpunkt zwischen einer Mittellinie (X) des radialen Lochs (15) und einer Oberfläche der Kugel (13) verbindet, als λ definiert ist, eine axiale Position der Mittellinie (X) des radialen Lochs (15) so eingestellt ist, dass eine Beziehung 0° < λ ≤ 60° gilt,
wobei die Drehachse (s) der Kugel (13) eine Drehachse ist, wenn die Kugel (13) während der Drehung des Kugellagers (10) auf der Laufbahn-Nut (12a) des Außenrings und der Laufbahn-Nut(11a) des Innenrings rollt, und einen Winkel von im Wesentlichen 90° in Bezug auf eine Linie bildet, die den Kontaktwinkel α darstellt.

2. Kugellager nach Anspruch 1, wobei
eine Öffnung des radialen Lochs (15) an der Innendurchmesser-Seite vollständig in dem geneigten Abschnitt (12b1) positioniert ist.

3. Kugellager nach Anspruch 1, wobei
eine Öffnung des radialen Lochs (15) an der Innendurchmesser-Seite so positioniert ist, dass sie den geneigten Abschnitt (12b1) und den geraden Abschnitt (12b2) überspannt.

4. Kugellager nach Anspruch 1, wobei
eine Öffnung des radialen Lochs (15) an der Innendurchmesser-Seite vollständig in dem geraden Abschnitt (12b2) positioniert ist.

5. Kugellager nach Anspruch 1, wobei
eine Öffnung des radialen Lochs (15) an der Innendurchmesser-Seite so positioniert ist, dass sie den geraden Abschnitt (12b2) und die Laufbahn-Nut (12a) des Außenrings überspannt.

6. Kugellager nach Anspruch 1, wobei
eine Öffnung des radialen Lochs (15) an der Innendurchmesser-Seite vollständig in der Laufbahn-Nut (12a) des Außenrings positioniert ist.

7. Kugellager nach einem der Ansprüche 1 bis 6, wobei
die axiale Position der Mittellinie (X) des radialen Lochs (15) so eingestellt ist, dass eine Beziehung 30° ≤ λ ≤ 60° gilt.

8. Kugellager nach einem der Ansprüche 1 bis 7, wobei
eine vertiefte Nut (16), die mit dem radialen Loch (15) in Verbindung steht, an der Außenumfangsfläche des Außenrings (12) in einer Umfangsrichtung desselben ausgebildet ist.

9. Kugellager nach Anspruch 8, wobei
Ringnuten an der Außenumfangsfläche des Außenrings (12) in der Umfangsrichtung an beiden axialen Seiten ausgebildet sind, die die vertiefte Nut (16) einschließen, und in jeder der Ringnuten ein ringförmiges Dichtungselement angeordnet ist.

10. Kugellager nach einem der Ansprüche 1 bis 9, wobei
ein Durchmesser des radialen Lochs (15) 0,5 mm bis 1,5 mm beträgt.

11. Kugellager nach einem der Ansprüche 1 bis 10, das ein für eine WerkzeugmaschinenSpindel eingesetztes Lager ist.

## Revendications

1. Roulement à billes (10) lubrifié par de l'huile de lubrification, comprenant :
une bague interne (11) incluant une rainure de chemin de bague interne (11a) sur sa surface circonférentielle externe,
une bague externe (12) incluant une rainure de chemin de bague externe (12a) sur sa surface circonférentielle interne, et
une pluralité de billes (13) agencées pour pouvoir rouler entre la rainure de chemin de bague interne (11a) et la rainure de chemin de bague externe (12a), où
la bague externe (12) inclut au moins un trou radial (15) qui s'étend radialement au travers de la bague externe (12) depuis sa surface circonférentielle externe jusqu'à sa surface circonférentielle interne, et
un contre alésage (12b) est prévu sur la surface circonférentielle interne de la bague externe (12), **caractérisé en ce que** :
le contre alésage (12b) inclut une partie inclinée (12b1) dont le diamètre diminue progressivement depuis la surface terminale axiale vers la rainure de chemin de bague externe (12a), et une partie droite (12b2) qui relie la partie inclinée (12b1) et la rainure de chemin de bague externe (12a) qui est parallèle à la ligne médiane (L) de l'axe de rotation du roulement à billes (10), et **en ce que**
lorsque l'angle mineur, formé par rapport à l'axe de rotation (s) de la bille (13) par une ligne droite qui relie le centre (O) de la bille (13) et le point d'intersection situé entre la ligne médiane (X) du trou radial (15) et la surface de la bille (13), est défini comme étant λ, la position axiale de la ligne médiane (X) du trou radial (15) est établie pour satisfaire à la relation 0 ° < λ ≤ 60 °,
dans lequel l'axe de rotation (s) de la bille (13) est un axe de rotation défini quand la bille (13) roule sur la rainure de chemin de bague externe (12a) et sur la rainure de chemin de bague interne (11a) pendant la rotation du roulement à billes (10) et forme un angle de pratiquement 90 ° par rapport à une ligne représentant l'angle de contact α.

2. Roulement à billes selon la revendication 1, dans lequel :
l'ouverture du côté diamètre interne du trou radial (15) est entièrement positionnée dans la partie inclinée (12b1).

3. Roulement à billes selon la revendication 1, dans lequel :
l'ouverture du côté diamètre interne du trou radial (15) est positionnée pour chevaucher la partie inclinée (12b1) et la partie droite (12b2).

4. Roulement à billes selon la revendication 1, dans lequel :
l'ouverture du côté diamètre interne du trou radial (15) est entièrement positionnée dans la partie droite (12b2) .

5. Roulement à billes selon la revendication 1, dans lequel :
l'ouverture du côté diamètre interne du trou radial (15) est positionnée pour chevaucher la partie droite (12b2) et la rainure de chemin de bague externe (12a).

6. Roulement à billes selon la revendication 1, dans lequel :
l'ouverture du côté diamètre interne du trou radial (15) est entièrement positionnée dans la rainure de chemin de bague externe (12a).

7. Roulement à billes selon l'une quelconque des revendications 1 à 6, dans lequel :
la position axiale de la ligne médiane (X) du trou radial (15) est établie pour satisfaire à la relation 30 ° ≤ λ ≤ 60 °.

8. Roulement à billes selon l'une quelconque des revendications 1 à 7, dans lequel :
une rainure en retrait (16), en communication avec le trou radial (15), est formée sur la surface circonférentielle externe de la bague externe (12) le long de sa direction circonférentielle.

9. Roulement à billes selon la revendication 8, dans lequel :
des rainures annulaires sont formées sur la surface circonférentielle externe de la bague externe (12) le long de la direction circonférentielle sur les deux flancs axiaux enserrant la rainure en retrait (16), et un élément d'étanchéité annulaire est agencé dans chacune des rainures annulaires.

10. Roulement à billes selon l'une quelconque des revendications 1 à 9, dans lequel :
le diamètre du trou radial (15) est compris entre 0,5 mm et 1,5 mm.

11. Roulement à billes selon l'une quelconque des revendications 1 à 10, qui est un roulement utilisé pour un axe de machine-outil.
